# EUROPÄISCHE PATENTSCHRIFT

(11) **EP 2 128 050 B1**
(45) Veröffentlichungstag und Bekanntmachung des Hinweises auf die Patenterteilung: **28.12.2011**
(21) Anmeldenummer: 09161168.1
(22) Anmeldetag: 26.05.2009
(51) Int. Cl.: B65G 17/20

(54) **Hängeförderanlage**
Overhead transport assembly
Installation de transport suspendue

(30) Priorität: 27.05.2008 DE 202008007100 U
(43) Veröffentlichungstag der Anmeldung: 02.12.2009
(73) Patentinhaber: psb intralogistics GmbH, 66955 Pirmasens (DE)
(72) Erfinder: Neuber, Wolfgang, 66504, Bottenbach (DE); Dietz, Lothar, 66999, Hinterweidenthal (DE)
(74) Vertreter: Viering, Hans-Martin

(56) Entgegenhaltungen:
- EP-A- 0 648 693
- DE-A1- 3 941 459
- GB-A- 2 003 812

## Beschreibung

Die Erfindung betrifft eine Hängeförderanlage zum hängenden Fördern, z.B. umlaufenden Hängefördern, von Waren, wie z.B. auf Kleiderbügeln aufgehängten Textilwaren.

Die DE 39 41 459 A1 offenbart eine Hängeförderanlage mit einer Führungsbahn und an der Führungsbahn hängenden Warenträgern, welche über einen Antrieb entlang der Führungsbahn geführt bewegbar sind, wobei die Warenträger jeweils ein langgestrecktes Antriebselement aufweisen, an dem der Antrieb angreifen kann und an dessen Unterseite mehrere Warenhalteelemente zum Halten einer jeweiligen Ware angebracht sind, wobei benachbarte Antriebselemente über Gelenkkupplungen miteinander verbunden sind und die Warenhalteelemente voneinander getrennt angeordnet sind.

Die GB 2 003 812 A offenbart eine Hängeförderanlage mit einer Führungsbahn und an der Führungsbahn hängenden Warenträgern, welche über einen Antrieb entlang der Führungsbahn geführt bewegbar sind, wobei die Warenträger jeweils ein langgestrecktes Antriebselement aufweisen, an dem der Antrieb angreifen kann, und jeweils ein langgestrecktes Warenhalteelement zum Halten von Waren aufweisen, welches im Vertikalabstand unter dem jeweiligen Antriebselement angeordnet ist, wobei jeweils benachbarte Antriebselemente und jeweils benachbarte Warenhalteelemente an ihren jeweils zugewandten Enden gelenkig miteinander verbunden sind, und wobei die Gelenkachsen zwischen den Antriebselementen gleich den Gelenkachsen der Warenhalteelemente sind.

Die EP 0 648 693 A1 offenbart eine Hängeförderanlage mit einer Führungsbahn und an der Führungsbahn hängenden Warenträgern, welche über einen Antrieb entlang der Führungsbahn geführt bewegbar sind, wobei die Warenträger jeweils ein langgestrecktes Antriebselement aufweisen, an dem der Antrieb angreifen kann, und jeweils ein langgestrecktes Warenhalteelement zum Halten von Waren aufweisen, welches im Vertikalabstand unter dem jeweiligen Antriebselement angeordnet ist gemäss dem Oberbegriff des Anspruchs 1 und wobei jeweils benachbarte Antriebselemente gelenkig miteinander verbunden sind, und wobei die Warenhalteelemente voneinander getrennt ausgebildet sind.

Durch die Erfindung wird eine Hängeförderanlage geschaffen, mittels welcher Waren zwei- und/oder dreidimensional transportierbar sind, welche einen geringen Platzbedarf hat und welche kostengünstig realisierbar ist.

Hierzu stellt die Erfindung eine Hängeförderanlage gemäß dem Anspruch 1 bereit. Weiterbildungen der Erfindung sind in den abhängigen Ansprüchen beschrieben.

### Bei der im Anspruch 1 beschriebenen Hängeförderanlage sind u. a. folgende Aspekte zu beachten:

Dadurch, dass die Warenhalteelemente im Vertikalabstand unter den Antriebselementen angeordnet sind, kommen an den Antriebselementen angreifende Antriebsorgane des Antriebs und an den Warenhalteelementen aufgehängte Waren nicht miteinander in Konflikt. Der Warenhaltestrang ist geschlossen und verläuft damit ununterbrochen, sodass Waren an einer beliebigen Stelle des Warenhaltestrangs diesem zugeführt und von diesem gehalten und transportiert werden können.

Dadurch, dass die Antriebselemente nicht miteinander verbundenen sind, ist es möglich, den Antriebselementstrang entlang engster Kurven im Raum, z.B. entlang enger 180° Vertikal- und Horizontalkurven, vorzusehen, wodurch der Platzbedarf verringert wird. Das nicht Verbundensein der Antriebselemente ist hierbei so zu verstehen, dass keine direkte Verbindung zwischen den Antriebselementen vorliegt; es liegt jedoch zur Erlangung eines insgesamt geschlossenen Warenträgerstrangs (=Förderstrangs) eine indirekte Verbindung der Antriebselemente vor, und zwar durch die feste Verbindung der Antriebselemente mit den zugehörigen Warenhalteelementen, die ihrerseits gelenkig miteinander verbunden sind, wodurch die Warenträger insgesamt gelenkig miteinander verbunden sind. Indem die Antriebselemente nicht (unmittelbar) miteinander verbunden sind, entfallen entsprechende mit weiteren Kosten verbundene Kupplungselemente.

Die Warenhalteelemente können nur horizontalgelenkig (=vertikale Gelenkachse) miteinander verbunden sein. Die Warenhalteelemente sind nach einer Ausführungsform raumgelenkig miteinander verbunden, so dass der Warenhaltestrang entsprechend dem Antriebselementstrang dreidimensional im Raum verlaufen kann. Die Gelenkverbindung kann in jeder erdenklichen Weise erfolgen, z.B. anhand von Bolzengelenken, Filmscharnieren, elastischen Elementen, wie elastischen Stäben (wie z.B. Gummistäben), elastischen Rohren (wie z.B. Gummirohren,), Schläuchen, Spiralfedern (z.B. Zug-Spiralfedern, deren Windungen von einem zur Federlängsachse konzentrischen flachen Blattmaterial ausgebildet sind, sodass im Entspannungszustand eine geschlossene, zylindrische Mantelfläche ausgebildet ist), etc.. Nach einer Ausführungsform ist zwischen benachbarten Warenhalteelementen jeweils ein Kreuzgelenk, z.B. auch mit in Warenhaltestrangrichtung gegeneinander versetzt angeordneten Kreuzgelenkachsen, vorgesehen; das Kreuzgelenk hat z.B. eine horizontale und eine dazu senkrecht verlaufende (vertikale) Achse. Das Kreuzgelenk erlaubt zum einen eine ausreichende Raumgelenkigkeit und zum anderen eine sichere Kraftübertragung (Zug- und Druckkräfte können übertragen werden) in Warenhalteelementstrangrichtung.

Die Warenträger sind z.B. anhand ihrer Antriebselemente an der Führungsbahn aufgehängt. Dies kann z.B. dadurch erfolgen, dass eine Vertikalachse in Form eines Vertikalbolzens vorgesehen ist, mit der das Antriebselement horizontal bzw. parallel zur Führungsbahn drehbar verbunden ist und die ihrerseits fest mit einer an der Führungsbahn geführten Laufkatze (z.B. einem Roll- oder Gleitkörper) verbunden ist; die Vertikalachse dieser Aufhängung an der Führungsbahn ist z.B. genau fluchtend mit einer Vertikalachse des Kreuzgelenks, sodass ein ruckfreierer Kurvenbetrieb erreicht wird. Nach einer Ausführungsform ist die Vertikalachse im vorderen Drittel oder auch vorderen Viertel (in Richtung des Antriebselementstrangs gesehen) angeordnet; hiermit kann das Kreuzgelenk in einfacherer Weise mit seiner Vertikalachse nahe an der Trennstelle zwischen benachbarten Warenträgern fluchtend zur Vertikalachse der Aufhängung an der Führungsbahn angeordnet werden.

Der Kräfteverlauf im Antrieb ist wie folgt: Vom Antrieb wird eine Antriebskraft auf diverse Antriebselemente des Antriebselementstrangs übertragen; dies kann z.B. durch eine oder mehrere Reibradanordnungen mit jeweils z.B. einem oder zwei oder mehr einander gegenüberliegenden und seitlich an den Antriebselementen angreifenden, motorgetriebenen Reibrädern erfolgen. Die Antriebskraft wird dann von den jeweils gerade angetriebenen Antriebselementen über die Verbindung zwischen diesen und den zugehörigen Warenhalteelementen auf diese Warenhalteelemente übertragen, wobei dann die Gelenkverbindungen zwischen den Warenhalteelementen dafür sorgt, dass die Antriebskraft entlang des geschlossenen Warenhalteelementstrangs von Warenträger zu Warenträger übertragen wird, sodass eine Schiebebewegung und/oder eine Zugbewegung der Warenträger vorliegen kann. Die gelenkige Verbindung zwischen den Warenhalteelementen ist damit z.B. derart, dass sie eine Zugkraft und/oder eine Druckkraft zwischen den Warenhalteelementen übertragen kann. Es kommen aber auch andere Antriebe in Frage, wie z.B. Zahnradantriebe, wobei die Zahnräder z.B. seitlich in entsprechende Rasterungen in den Antriebselementen eingreifen.

Die Antriebselemente sind z.B. als langgestreckte flache Platten mit vertikal bzw. parallel zur Führungsbahn angeordneter Plattenfläche ausgebildet, sodass eine breite Vertikalfläche für den Eingriff durch den Antrieb bereitgestellt ist, welche auch zur Anbringung von den jeweiligen Warenträger individuell identifizierenden Kodierungen verwendet werden kann. Die Platten sind nach einer Ausführungsform in einem sehr engen Abstand zueinander angeordnet, z.B. kleiner gleich 1 cm oder auch kleiner gleich 0,5 cm, sodass es hinsichtlich der Kraftübertragung zwischen dem Antrieb und den Antriebselementen zu keinen Unterbrechungen kommt, welche andernfalls eine Ruckbewegung verursachen könnten. Um hierbei eine ausreichende vertikale Relativbewegung der Antriebselementen zueinander zu erlauben, sind nach einer Ausführungsform die Antriebselemente, d.h. z.B. die Platten, an einander zugewandten Stirnseiten komplementär zueinander abgerundet ausgebildet, z.B. kreisbogenförmig abgerundet, wobei der Mittelpunkt des zugehörigen Kreises z.B. mit der horizontalen Achse eines Kreuzgelenks zusammenfällt.

Eine wie oben erwähnte Kodierung ist z.B. benachbart zu der Vertikalachse angeordnet; hierbei kann das plattenförmige Antriebselement eine sich in Richtung zu der Führungsbahn hin erstreckende Lasche haben, in oder an welcher die Vertikalachse horizontal drehbar angebracht ist und an welcher auch die Kodierung seitlich angebracht ist. Die Kodierung kann z.B. ein mittels eines Scanners lesbarer Barcode sein.

Die Warenhalteelemente sind z.B. als Stangen mit rundem oder vierkantigem Querschnitt vorgesehen und z.B. über Vertikalstege mit den zugehörigen Antriebselementen verbunden (=leiterförmige Ausbildung der Warenträger). Hiermit können z.B. Kleiderbügel einfach in die von der Leiterform gebildeten Fächer eingehängt und von der jeweiligen Stange gehalten transportiert werden. Der Vertikalabstand zwischen dem Antriebselement und dem Warenhalteelement ist z.B. an die dazwischen eingreifenden Halteteile, wie z.B. die Hakenteile von Kleiderbügeln, angepasst und kann z.B. zwischen 2-8cm betragen. Es ist auch denkbar, das Antriebselement, wie z.B. die Platte, unmittelbar, d.h. z.B. ohne Zwischenschaltung von Vertikalstegen, unmittelbar oben am jeweils zugehörigen Warenhalteelement zu befestigen, z.B. via Schweißen, wobei dann das Warenhalteelement mit einer oder mehreren hinsichtlich der Position im Förderstrang genau definierten Halteteilen, z.B. Hakenteilen, ausgestattet sein kann, an denen Waren angehängt werden können.

Die im Anspruch 12 beschriebene Hängeförderanlage ist zu der wie oben beschriebenen Hängeförderanlage ähnlich aufgebaut, mit dem Unterschied, dass die wie oben beschriebenen Warenhalteelemente nunmehr Antriebselemente darstellen, an denen der Antrieb direkt angreift, z.B. wie oben anhand der dortigen Antriebselemente beschrieben seitlich angreift. Von daher liegt bei dieser Ausführungsform entgegen den vorhergehend beschriebenen Ausführungsformen ein geschlossener, d.h. ununterbrochener, Antriebsstrang vor und die Warenhalteelemente sind in Richtung des Antriebsstrangs gesehen in einem Abstand voneinander angeordnet und nicht (unmittelbar) miteinander verbunden, sodass nur an definierten Positionen und nicht wie oben beim durchgehenden Warenhaltestrang an beliebiger Stelle Waren angehängt werden können. Die Antriebselemente sind demnach z.B. wie die anhand der obigen Ausführungsformen gemäß Anspruch 1 beschrieben Warenhalteelemente ausgebildet, d.h. z.B. in der wie oben beschriebenen Stangenform mit den entsprechenden raumgelenkigen Kreuzgelenkverbindungen dazwischen.

Die Warenhalteelemente sind in diesem Falle z.B. einzelne Hakenteile, von denen eins oder mehrere an einem jeweiligen Antriebselement fest angebracht sein kann/können (z.B. via Schweißen, Schrauben).

Bei der im Anspruch 12 beschriebenen Hängeförderanlage können alternativ zu den Warenträgern auch Warenmitnehmer vorgesehen sein, wobei dann anstelle der Warenhalteelemente jeweilige vertikal bzw. senkrecht zur Führungsbahn bewegbare Warenmitnehmerteile zum Mitnehmen von Waren vorgesehen sind. Diese Warenmitnehmerteile sind z.B. Hakenteile mit einem in Bewegungsrichtung der Warenmitnehmer nachlaufenden Mitnehmerhaken und einer vorlaufenden Rampe. Der Warenmitnehmer nimmt mit seinem Haken eine vertikal darunter angeordnete Ware, z.B. einen auf einer Stange oder einer sonstigen Förderbahn aufgehängten Kleiderbügel, in Förderrichtung mit. Das Warenmitnehmerteil kann mit seiner Rampe auf vor dem Warenmitnehmerteil vorliegende Waren, z.B. Kleiderbügel, auflaufen, wodurch das Warenmitnehmerteil vertikal bzw. senkrecht zur Führungsbahn angehoben wird und der davon gerade geförderte Kleiderbügel von dem Mitnehmerhaken freigegeben wird. Bei erreichen der letzten Ware in dieser Warenansammlung gelangt das Mitnehmerteil wieder vertikal nach unten; hierbei kann der Mechanismus derart eingerichtet sein, dass die letzte Ware wieder von dem Mitnehmerhaken mitgenommen wird.

Die Erfindung wird im Folgenden anhand von Ausführungsbeispielen mit Bezugnahme auf die Zeichnung beschrieben. In der Zeichnung zeigen:
Figur 1 eine abgeschnittene, schematische Seitenansicht auf eine Hängeförderanlage gemäß einer Ausführungsform der Erfindung,
Figur 2 eine Schnittansicht entlang der Linie A-A von Fig. 1,
Figur 3A eine abgeschnittene, schematische Seitenansicht einer Hängeförderanlage gemäß einer anderen Ausführungsform der Erfindung, und
Figur 3B einen Querschnitt des Förderstrangs der in Figur 3A gezeigten Hängeförderanlage.

In den Figuren sind gleiche Teile mit den gleichen Bezugszeichen versehen.

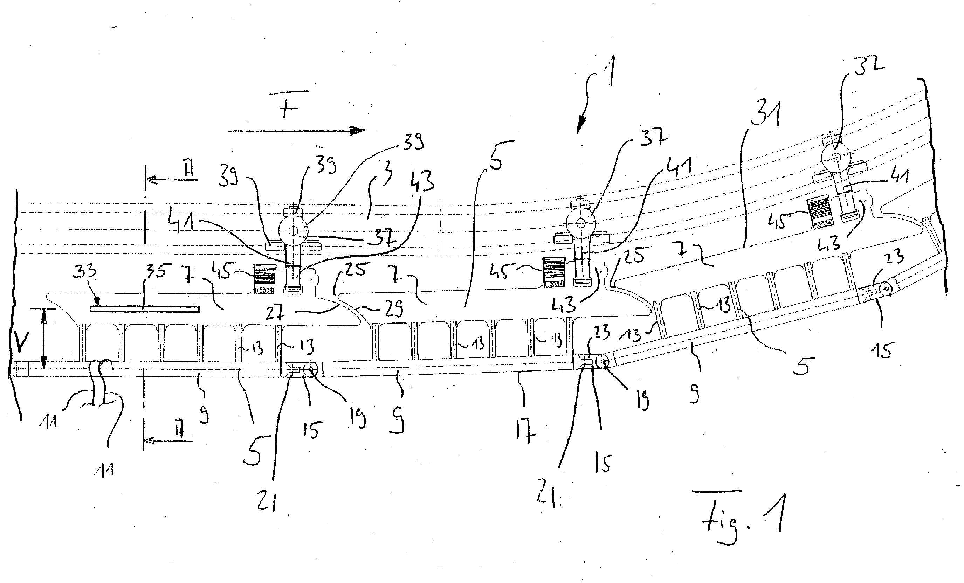

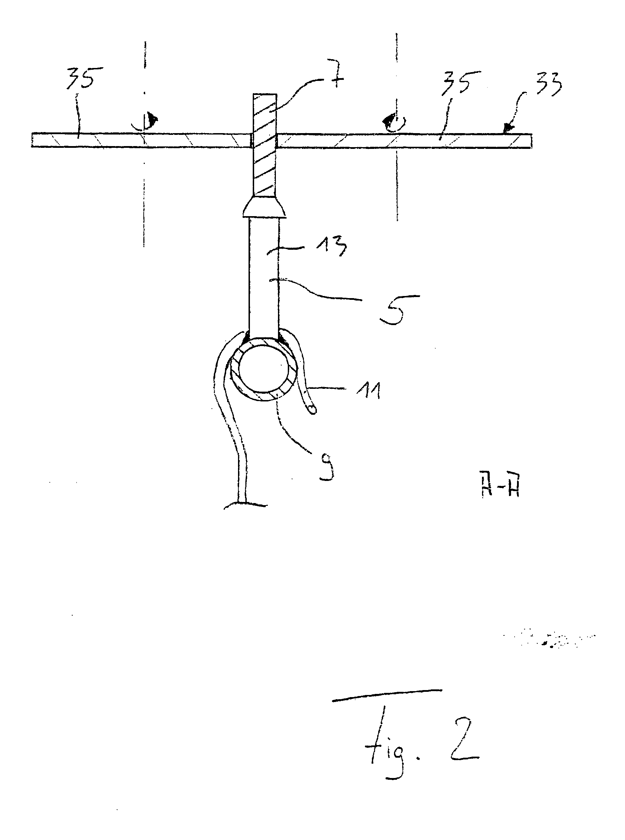

Die in den Figuren 1 und 2 dargestellte Hängeförderanlage 1 hat eine Führungsbahn 3, die sich aus Profilschienen, z.B. Aluminiumprofilschienen, zusammensetzt, und hat eine Mehrzahl von Warenträgern 5, die aufeinanderfolgend entlang der Führungsbahn 3 an dieser hängend angeordnet sind und die entlang der Führungsbahn 3 zusammenhängend geführt bewegbar sind, sodass ein geschlossener Umlauf-Förderstrang ausgebildet ist.

Der jeweilige Warenträger 5 hat ein langgestrecktes Antriebselement 7 in Form einer Platte mit vertikal angeordneter Plattenfläche und ein im Vertikalabstand V davon sowie unter dem Antriebselement 7 angeordnetes Warenhalteelement 9 in Form eines hohlen Rundstabs, von welchem Waren 11 in Form von Kleiderbügeln mit daran hängenden Textilien (nicht dargestellt) gehalten werden können. Das Antriebselement 7 und das Warenhalteelement 9 sind über senkrecht zu deren Längsrichtung verlaufende, vertikale Stege 13 miteinander fest verbunden, sodass der jeweilige Warenträger 5 eine starre Leiterform hat.

Die Warenhalteelemente 9 von jeweils benachbarten Warenträgern 5 sind über ein jeweiliges Kreuzgelenk 15 raumgelenkig miteinander verbunden, sodass ein durchgehender, ununterbrochener Warenhaltestrang 17 ausgebildet wird. Die hiermit geschlossen aneinander hängenden Warenträger 5 bilden den genannten Förderstrang. Das Kreuzgelenk 15 hat zwei in Richtung des Warenhaltestrangs 17 gegeneinander versetzt angeordnete Gelenkachsen mit einer horizontal verlaufenden Gelenkachse 19, welche eine Relativbewegung benachbarter Warenhalteelemente 9 in der Vertikalen erlaubt, und einer dazu senkrecht verlaufenden Gelenkachse 21, welche eine Relativbewegung der Warenhalteelemente 9 in der Horizontalen erlaubt. Das Kreuzgelenk hat ferner ein zwischen die gegeneinander versetzt angeordneten Gelenkachse 19, 21 geschaltetes, kurzes Zwischenstück 23 in Form einer kurzen Hülse mit gleichem Außendurchmesser wie die Warenhalteelemente 9. Insgesamt ist die äußere Querschnittsabmessung des Kreuzgelenks 15 im Wesentlichen gleich jener der Warenhalteelemente 9.

Die Antriebselemente 7 der Warenträger 5 sind ihrerseits nicht miteinander verbunden, d.h. nicht direkt miteinander verbunden, wobei die Antriebselemente 7 zwischen den Warenträgern 5 über eine schmale Trennstelle 25 im stirnseitigen Abstand voneinander getrennt sind; die Trennstelle 25 verläuft kreisbogenförmig, wobei der Mittelpunkt des zugehörigen Kreises in der horizontalen Gelenkachse 19 des zugehörigen Kreuzgelenks 15 liegt. Hierzu sind die Antriebselemente 7 an zueinander benachbarten Stirnenden mit einander komplementären Abrundungen versehen; hier sind die in Förderrichtung F des Förderstrangs vorlaufenden Stirnenden der Antriebselemente 7 mit einer konvexen Abrundung 27 und die in Förderrichtung F des Förderstrangs nachlaufenden Stirnenden der Antriebselemente 7 mit einer konkaven Abrundung 29 versehen. Durch die voneinander separierte Anordnung der Antriebselemente 7 können diese entlang des Förderstrangs enge horizontale und, wie in Figur 1 dargestellt, enge vertikale Kurven störungsfrei durchlaufen.

Die Antriebselemente 7 bilden aufgrund ihrer aufeinander folgenden Anordnung quasi einen Antriebsstrang 31 aus, der jedoch zwischen den einzelnen Warenträgern 5 durch die jeweiligen Trennstellen 25 unterbrochen und damit nicht durchgehend bzw. nicht geschlossen ist.

Die Förderanlage 1 hat ferner mehrere automatische Antriebe 33 (nur einer ist dargestellt), z.B. Elektromotorantriebe, mit zwei einander gegenüberliegenden Reibrädern 35, die an diversen Stellen entlang dem Förderstrang bzw. dem Antriebsstrang 31 seitlich auf Höhe des Antriebsstrangs 31 angeordnet sind und in Reibkontakt mit dem dort jeweils temporär vorliegenden Antriebselement 7 des Antriebstrangs 21 stehen, um dieses in Förderrichtung F zu schieben.

Die von den Reibrädern 35 in das jeweilige Antriebselement 7 eingebrachte Antriebskraft wird über die Stege 13 zu dem zugehörigen, vertikal darunter liegenden Warenhalteelement 9 übertragen und über die Kreuzgelenke 15 in den gesamten, zusammenhängenden Warenhalteelementestrang 17 eingebracht, sodass letzterer und damit der gesamte Förderstrang einstückig in Förderrichtung 7 bewegbar ist, um dadurch die Waren 11 entsprechend zu fördern. Bei einem versehentlichen Blockieren des Förderstrangs können die Reibräder 35 einfach durchrutschen; die Trennstellen 25 sind so schmal, dass sie von den Reibrädern 25 derart überlaufen werden, dass eine nahezu ruckfreie Bewegung gegeben ist.

Die Verbindung zwischen den Warenträgern 5 und der Führungsbahn 3 erfolgt bei dieser Ausführungsform über Rollen-Laufkatzen 37, deren Rollen 39 in von den Profilschienen der Führungsbahn 3 gebildeten Führungskanälen in Vertikal- und Horizontalrichtung geführt laufen. Eine detailgenauere Querschnittsansicht der Führungsbahn 3 mit darin geführt Rollen-Laufkatze 37 ist z.B. aus Figur 5 ersichtlich.

Von der Rollen-Laufkatze 37 aus erstreckt sich eine Vertikalachse in Form eines Haltebolzens 41 senkrecht zur Führungsbahn 3 nach unten in Richtung zu dem zugehörigen Warenträger 5 und greift dort horizontal drehbar in eine am zugeordneten Antriebselement 7 einstückig ausgeformte plattenförmige Lasche 43 ein. Über den ansonsten (d.h. gegenüber dem Laufkatzenkörper) drehfesten Haltebolzen 41 wird die Rollen-Laufkatze 37 mit dem Warenträger 5 in die Förderrichtung F mitbewegt. (Der Haltebolzen 41 kann auch in der Laufkatze 37 drehbar und am Antriebselement 7 drehfest angeordnet sein.)

Die Vertikalachse des Haltbolzens 41 fluchtet mit der vertikalen Gelenkachse 21 des Kreuzgelenks 15, sodass ein Horizontalkurvenbetrieb ungestört ist. Die Vertikalachse des Haltebolzens 41 befindet sich in Förderrichtung F gesehen im vorderen Viertel des Warenträgers 5 bzw. des Antriebselements 7, sodass das Kreuzgelenk 15 mit seiner Vertikalachse 21 benachbart zu bzw. nahe an der Trennstelle 25 zwischen den Antriebselementen 7 angeordnet werden kann.

Die Lasche 43 ist ausgehend von der Aufnahmestelle für den Haltebolzen 41 nach hinten etwas verlängert und dient dort als Aufnahme einer Kodierung 45, die hier in Form eines von einem Laserscanner lesbaren Barcodes realisiert ist, der eine für den zugehörigen Warenträger 5 individuell charakteristischen Strichcode aufweist.

Der Hängeförderer 1 ist in der Regel als Umlaufförderer ausgebildet und läuft angetrieben von den Antrieben 33 in Förderrichtung F um. Die Waren können aufgrund der lückenlosen Ausbildung des Halteelementstranges 17 an jeder beliebigen Stelle dem Förderstrang zugeführt und davon wieder abgeführt werden. Der Hängeförderer 1 eignet sich für die Verwendung in einer Sortier- und Weiterverteilanlage von Waren.

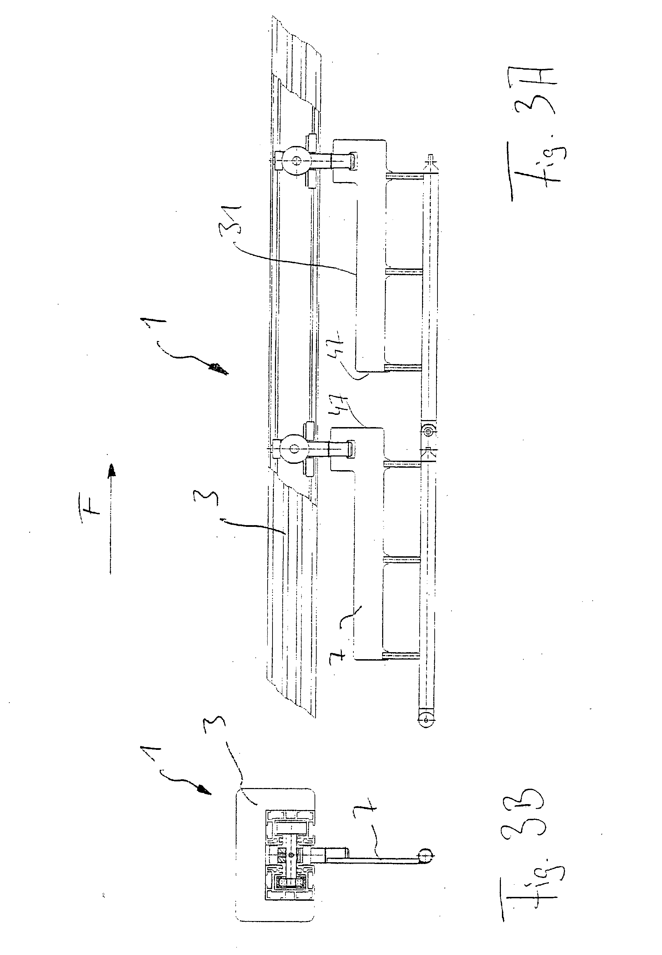

Der in den Figuren 3A und 3B dargestellte Hängeförderer 1 entspricht im Wesentlichen dem in den Figuren 1 und 2 gezeigten Hängeförderer 1, wobei hier jedoch die Antriebselemente 7 an den einander zugewandten Stirnenden nicht abgerundet, sondern mit zueinander parallelen, senkrecht zur Führungsbahn 3 verlaufenden Stirnrändern 47 ausgebildet sind. Daher ist der Abstand zwischen den Antriebselementen 7 in Förderrichtung F etwas größer gewählt, um die gewünschten engen Vertikalkurven zu erlauben. Ein ruckfreier Antrieb kann hier zum Beispiel dadurch erreicht werden, dass das jeweilige Reibrad durch ein umlaufendes Reibband ersetzt ist, dessen Lasttrumm länger als die Lücke zwischen benachbarten Antriebselementen 7 ist und das am Antriebsstrang 31 via Reibkontakt angreift (Raupenantrieb). Ein solches Reibband kann auch bei allen anderen möglichen Ausführungsformen gemäß der Erfindung als Antrieb angewandt werden. Alternativ können auch in Förderrichtung F nahe benachbart hintereinander angeordnete Reibräder vorgesehen sein.

## Patentansprüche

1. Hängeförderanlage (1)
mit einer Führungsbahn (3) und
mit Warenträgern (5), welche
- an der Führungsbahn (3) hängen und über einen Antrieb (33) entlang der Führungsbahn (3) geführt bewegbar sind,
- jeweils ein langgestrecktes Antriebselement (7) aufweisen, an dem der Antrieb (33) angreifen kann und
- jeweils ein langgestrecktes Warenhalteelement (9) zum Halten von einer oder mehreren Waren (11) aufweisen, welches im Vertikalabstand (V) unter dem Antriebselement (7) angeordnet und mit dem Antriebselement (7) fest verbunden ist, **dadurch gekennzeichnet, dass**
jeweils benachbarte Warenhalteelemente (9) gelenkig miteinander verbunden sind, sodass ein geschlossener Warenhaltestrang (17) ausgebildet ist, und wobei jeweils benachbarte Antriebselemente (7) voneinander getrennt sind, sodass ein zwischen benachbarten Antriebselementen (7) jeweils unterbrochener Antriebselementstrang (31) ausgebildet ist.

2. Hängeförderanlage (1) nach Anspruch 1, wobei die Antriebselemente (7) als flache Platten mit vertikal angeordneter Plattenfläche ausgebildet sind.

3. Hängeförderanlage (1) nach Anspruch 2, wobei die Platten an einander zugewandten Stirnseiten komplementär zueinander abgerundet (27, 29) geformt sind.

4. Hängeförderanlage (1) nach einem der vorangehenden Ansprüche, wobei die Warenhalteelemente (9) als Stangen mit z.B. Rund- oder Vierkantquerschnitt, ausgebildet sind.

5. Hängeförderanlage (1) nach einem der vorangehenden Ansprüche, wobei die Antriebselemente (7) und die Warenhalteelemente (9) über Vertikalstege (13) miteinander verbunden sind, sodass die Warenträger (5) leiterförmig ausgebildet sind.

6. Hängeförderanlage (1) nach einem der vorangehenden Ansprüche, wobei jeweils benachbarte Antriebselemente (7) in Richtung des Antriebselementstrangs (31) gesehen in einem Abstand von kleiner oder gleich einem Zentimeter, z.B. kleiner oder gleich einem halben Zentimeter, angeordnet sind.

7. Hängeförderanlage (1) nach einem der vorangehenden Ansprüche, wobei die Antriebselemente (7) raumgelenkig miteinander verbunden sind, z.B. mittels Kreuzgelenken (15), wobei z.B. die Gelenkachsen (21, 19) der Kreuzgelenke (15) in Richtung des Antriebselementstrangs (31) gegeneinander versetzt angeordnet sein können.

8. Hängeförderanlage (1) nach einem der vorangehenden Ansprüche, wobei die Warenträger (5) anhand der Antriebselemente (7) um eine Vertikalachse (41) drehbar an der Führungsbahn (3) aufgehängt sind, wobei sich die Vertikalachse (41) in Bewegungsrichtung (F) des Antriebselementstrangs (31) gesehen im vorderen Drittel des jeweiligen Antriebselements (7) befindet.

9. Hängeförderanlage (1) nach einem der vorangehenden Ansprüche, wobei an dem jeweiligen Antriebselement (7) eine den jeweils zugehörigen Warenträger (5) individuell identifizierende Kodierung (45) angebracht ist.

10. Hängeförderanlage (1) nach den Ansprüchen 8 und 9, wobei die Kodierung (45) benachbart zu der Vertikalachse (41) angebracht ist.

11. Hängeförderanlage (1) nach einem der vorangehenden Ansprüche, wobei der Antrieb (33) ein oder zwei einander gegenüberliegend seitlich an den Antriebselementen (7) angreifende Reibräder (35) aufweist.

12. Warensortieranlage mit einer Hängeförderanlage (1) nach einem der Ansprüche 1-11.

## Claims

1. Suspended conveyor system (1),
having a guide track (3) and
having product carriers (5)
- hanging from the guide track (3) and being movable in a guided manner by a driving mechanism (33) along the guide track (3),
- each having an elongated driving member (7) with which the driving mechanism (33) can engage, and
- each comprising an elongated product holding member (9) for holding one or more products (11) which is arranged at a vertical distance (V) under the driving member (7) and is firmly connected to the driving member (7), **characterized in that**
respectively adjacent product holding members (9) are hinged to each other, so that a closed product holding line (17) is formed, and wherein respectively adjacent driving members (7) are separate from each other, so that a driving member chain (31) is formed which is respectively interrupted between adjacent driving members (7).

2. Suspended conveyor system (1) according to claim 1, wherein the driving members (7) are formed as flat plates having a vertically arranged plate surface.

3. Suspended conveyor system (1) according to claim 2, wherein the plates are formed to be rounded (27, 29) complementary to each other on front sides facing each other.

4. Suspended conveyor system (1) according to any one of the preceding claims, wherein the product holding members (9) are formed as bars having, for example, a round or square cross-section.

5. Suspended conveyor system (1) according to any one of the preceding claims, wherein the driving members (7) and the product holding members (9) are connected to each other by vertical bridges (13), so that the product carriers (5) are formed in a ladder shape.

6. Suspended conveyor system (1) according to any one of the preceding claims, wherein correspondingly adjacent driving members (7) are arranged at a distance of equal to or less than a centimeter, for example of equal to or less than half a centimeter, when seen in a direction of the driving member chain (31).

7. Suspended conveyor system (1) according to any one of the preceding claims, wherein the driving members are connected to each other in a spatially articulated manner, for example by means of universal joints (15), wherein for example the axes of articulation (21, 19) of the universal joints (15) can be arranged to be offset relative to each other in the direction of the driving member chain (31).

8. Suspended conveyor system (1) according to any one of the preceding claims, wherein the product carriers (5) are suspended on the guide track (3) to be rotatable about a vertical axis (41) by means of the driving members (7), the vertical axis (41) being located in the front third of the corresponding driving member (7) when seen in a direction of motion (F) of the driving member chain (31).

9. Suspended conveyor system (1) according to any one of the preceding claims, wherein a coding (45) is attached to the corresponding driving member (7), individually identifying the correspondingly associated product carrier (5).

10. Suspended conveyor system (1) according to claims 8 and 9, wherein the coding (45) is attached adjacent to the vertical axis (41).

11. Suspended conveyor system (1) according to any one of the preceding claims, wherein the driving mechanism (33) comprises one or two friction wheels (35) engaging with the driving members (7) laterally opposite each other.

12. Product sorting plant having a suspended conveyor system (1) according to any one of claims 1 to 11.

## Revendications

1. Installation de transport suspendue (1),
avec une voie de guidage (3) et
des convoyeurs d'articles (5), qui
- sont suspendus à la voie de guidage (3) et qui peuvent être déplacés via un mécanisme d'entraînement (33) guidé le long de la voie de guidage (3),
- présentent respectivement un élément d'entraînement (7) allongé auquel le mécanisme d'entraînement (33) peut se raccrocher, et
- présentent respectivement un élément de retenue d'articles (9) allongé pour retenir un ou plusieurs articles (11), lequel est agencé à la distance verticale (V) en dessous de l'élément d'entraînement (7) et qui est solidement relié à l'élément d'entraînement (7), **caractérisée en ce que**
des éléments de retenue d'articles (9) respectivement adjacents sont reliés les uns aux autres de façon articulée de manière à former une ligne de retenue d'articles (17) fermée, et dans laquelle les éléments d'entraînement (7) adjacents respectifs sont séparés les uns des autres de manière à former une ligne d'éléments d'entraînement (31) respectivement interrompue entre des éléments d'entraînement (7) adjacents.

2. Installation de transport suspendue (1) selon la revendication 1, dans laquelle les éléments d'entraînement (7) se présentent sous la forme de plaques plates ayant une surface de plaque agencée verticalement.

3. Installation de transport suspendue (1) selon la revendication 2, dans laquelle les plaques sont formées de manière arrondie (27, 29) de sorte que les côtés frontaux orientés l'un vers l'autre sont mutuellement complémentaires.

4. Installation de transport suspendue (1) selon l'une quelconque des revendications précédentes, dans laquelle les éléments de retenue d'articles (9) se présentent sous la forme de tiges ayant, par exemple, une section transversale ronde ou carrée.

5. Installation de transport suspendue (1) selon l'une quelconque des revendications précédentes, dans laquelle les éléments d'entraînement (7) et les éléments de retenue d'articles (9) sont reliés l'un à l'autre par des traverses verticales (13) de sorte que les convoyeurs d'articles (5) se présentent sous la forme d'une échelle.

6. Installation de transport suspendue (1) selon l'une quelconque des revendications précédentes, dans laquelle des éléments d'entraînement (7) respectivement adjacents, observés dans la direction de la ligne d'éléments d'entraînement (31), sont agencés à une distance inférieure ou égale à un centimètre, par exemple inférieure ou égale à un demi-centimètre.

7. Installation de transport suspendue (1) selon l'une quelconque des revendications précédentes, dans laquelle les éléments d'entraînement (7) sont reliés les uns aux autres de manière articulée dans l'espace, par exemple au moyen de joints universels (15), dans laquelle les axes d'articulation (21, 19) des joints universels (15) peuvent, par exemple, être agencés de manière réciproquement décalée, en observant dans le sens de déplacement (F) de la ligne d'éléments d'entraînement (31), dans la direction de la ligne d'éléments d'entraînement (31).

8. Installation de transport suspendue (1) selon l'une quelconque des revendications précédentes, dans laquelle les convoyeurs d'articles (5) sont suspendus à la voie de guidage (3) à l'aide des éléments d'entraînement (7) de manière à pouvoir tourner autour d'un axe vertical (41), dans laquelle l'axe vertical (41) se trouve dans le tiers avant de l'élément d'entraînement (7) respectif quand on observe le sens de déplacement (F) de la ligne d'éléments d'entraînement (31).

9. Installation de transport suspendue (1) selon l'une quelconque des revendications précédentes, dans laquelle un codage (45) identifiant individuellement chaque convoyeur d'articles (5) est mis en place sur l'élément d'entraînement (7) respectif.

10. Installation de transport suspendue (1) selon les revendications 8 et 9, dans laquelle le codage (45) est mis en place de manière adjacente à l'axe vertical (41).

11. Installation de transport suspendue (1) selon l'une quelconque des revendications précédentes, dans laquelle le mécanisme d'entraînement (33) présente un ou deux roues de friction (35) affectée(s) en vis-à-vis, latéralement aux éléments d'entraînement (7).

12. Installation de triage d'articles avec une installation de transport suspendue (1) selon l'une quelconque des revendications 1 à 11.
